Europäisches Patentamt

European Patent Office

Office européen des brevets

(11) Veröffentlichungsnummer: **0 270 877**

**A1**

## (12) EUROPÄISCHE PATENTANMELDUNG

(21) Anmeldenummer: 87116849.8

(22) Anmeldetag: 14.11.87

(51) Int. Cl.4 **C09D 5/44** , C08G 59/56

(30) Priorität: 20.11.86 DE 3639656

(43) Veröffentlichungstag der Anmeldung:
15.06.88 Patentblatt 88/24

(84) Benannte Vertragsstaaten:
ES

(71) Anmelder: BASF Lacke + Farben
Aktiengesellschaft
Max-Winkelmann-Strasse 80
D-4400 Münster(DE)

(72) Erfinder: Geist, Michael, Dr.
Rubensstrasse 251
D-4400 Münster(DE)
Erfinder: Cibura, Klaus, Dr.
25680 W. Twelve Mile Road Appartment 302
Southfield Michigan 48086(US)
Erfinder: Fobbe, Helmut, Dr.
Liebigweg 5
D-4400 Münster(DE)
Erfinder: Ott, Günther, Dr.
Von-Holte-Strasse 101 a
D-4400 Münster(DE)
Erfinder: Ahlers, Klaas, Dr.
Föhrenweg 21
D-4400 Münster(DE)

(54) Selbstvernetzbare kathodisch abscheidbare wasserverdünnbare Bindemittel, wasserverdünnbare Überzugszusammensetzungen und Verfahren zur Herstellung von selbstvernetzbaren kathodisch abscheidbaren wasserverdünnbaren Bindemitteln.

(57) Die Erfindung betrifft selbstvernetzbare aktivierte Estergruppen und/oder blockierte Isocyanatgruppen enthaltende nach partieller oder vollständiger Neutralisation kathodisch abscheidbare wasserverdünnbare Bindemittel auf der Basis von Umsetzungsprodukten aus

    (A) gegebenenfalls modifizierten Epoxidharzen, deren Epoxidfunktionalität größer als 1 ist und deren Epoxidäquivalentgewicht unter 1000 liegt,

    (B) Polyphenolen und

    (C) Aminen, wobei die aktivierten Estergruppen und/oder blockierten Isocyanatgruppen durch eine der Komponenten (A) bis (C) und/oder über eine polymeranaloge Reaktion in die Bindemittelmoleküle eingeführt worden sind. Die erfindungsgemäßen Bindemittel zeichnen sich dadurch aus, daß sie hergestellt worden sind, indem zunächst ein Gemisch aus den Komponenten (B) und (C) hergestellt worden ist, das dann mit der Komponente (A) umgesetzt worden ist und das erhaltene Reaktionsprodukt nach eventueller Durchführung weiterer polymeranaloger Reaktionen mit einer Säure neutralisiert worden ist.

EP 0 270 877 A1

0 270 877

PAT 86 103
13.11.1986

BASF Lacke + Farben Aktiengesellschaft, Münster

Selbstvernetzbare kathodisch abscheidbare wasserverdünnbare
Bindemittel, wasserverdünnbare Überzugszusammensetzungen
und Verfahren zur Herstellung von selbstvernetzbaren
kathodisch abscheidbaren wasserverdünnbaren Bindemitteln

Die Erfindung betrifft selbstvernetzbare aktivierte Estergruppen und/oder blockierte Isocyanatgruppen enthaltende
nach partieller oder vollständiger Neutralisation wasserverdünnbare kathodisch abscheidbare Bindemittel auf der
Basis von Umsetzungsprodukten aus
(A) gegebenenfalls modifizierten Epoxidharzen, deren
    Epoxidfunktionalität größer als 1 ist und deren Epoxidäquivalentgewicht unter 1000 liegt,
(B) Polyphenolen und
(C) Aminen,
wobei die aktivierten Estergruppen und/oder blockierten
Isocyanatgruppen durch eine der Komponenten (A) bis (C)
und/oder über eine polymeranaloge Reaktion in die Bindemittelmoleküle eingeführt worden sind.

Selbstvernetzbare wasserverdünnbare kathodisch abscheidbare
Bindemittel werden zur Herstellung von Elektrotauchlacken
für die kationische Elektrotauchlackierung verwendet.
Die kationische Elektrotauchlackierung ist ein vor allem
zum Grundieren häufig angewandtes Lackierverfahren, bei
dem wasserverdünnbare kationische Gruppen tragende Kunstharze mit Hilfe von Gleichstrom auf elektrisch leitende
Körper aufgebracht werden.

Die Synthese der obengenannten Bindemittel wurde bisher
so durchgeführt, daß zunächst einmal das gegebenenfalls
modifizierte Epoxidharz mit der Polyphenolkomponente
zu einem epoxidgruppenhaltigen Zwischenprodukt umgesetzt

2

wurde und an die verbleibenden Epoxidgruppen anschließend die Aminkomponente addiert wurde. Diese Reaktionsfolge kann auch umgekehrt werden, d.h. zuerst wird ein Teil der Epoxidgruppen des gegebenenfalls modifizierten Epoxidharzes mit der Aminkomponente umgesetzt, und anschließend wird mit der Polyphenolkomponente weiter umgesetzt. In jedem Fall wird die Umsetzung mit der Polyphenol- und der Aminkomponente in aufeianderfolgenden, separaten Reaktionsschritten durchgeführt.

Die die Selbstvernetzung ermöglichenden aktivierten Estergruppen und/oder blockierten Isocyanatgruppen bzw. Vorstufen dieser Gruppierungen können über aktivierte Estergruppen und/oder blockierte Isocyanatgruppen enthaltende Epoxidharz-, Polyphenol- oder Aminkomponenten in die Bindemittelmoleküle eingeführt werden. Die aktivierten Estergruppen und/oder blockierten Isocyanatgruppen können aber auch durch polymeranaloge Umsetzung der aus den Komponenten (A) bis (C) erhaltenen Reaktionsprodukte mit Verbindungen, die neben aktivierten Estergruppen und/oder blockierten Isocyanatgruppen bzw. Vorstufen dieser Gruppierungen auch noch eine mit Epoxid- und/oder Hydroxylgruppen reaktive Gruppierung aufweisen, in die Bindemittelmoleküle eingeführt werden.

Die aus den Komponenten (A), (B) und (C) gegebenenfalls polymeranalog modifizierten Reaktionsprodukte liegen nach der Neutralisation mit einer Säure in wasserverdünnbarer Form vor.

Die auf die oben beschriebene Art und Weise hergestellten Bindemittel haben den Nachteil, daß sie in vielen Fällen schlecht wasserdispergierbar sind und zur Herstellung von Pigmentpasten nicht geeignet sind.

Pigmentpasten werden zur Inkorporation von Pigmenten und Füllmaterialien in Elektrotauchlacke benötigt. Diese Pigmentpasten können nur mit Harzen, die besonders gute Dispergier- und Pigmentbenetzungseigenschaften zeigen, hergestellt werden.

Der vorliegenden Erfindung liegt die Aufgabe zugrunde, verbesserte - insbesondere zur Herstellung von Pigmentpasten geeignete - Bindemittel der oben beschriebenen Art bereitzustellen.

Diese Aufgabe wird durch Bindemittel der eingangs beschriebenen Art gelöst, die hergestellt worden sind, indem zunächst ein Gemisch aus den Komponenten (B) und (C) hergestellt worden ist, das dann mit der Komponente (A) umgesetzt worden ist und das so erhaltene Reaktionsprodukt nach eventueller Durchführung weiterer polymeranaloger Reaktionen mit einer Säure neutralisiert worden ist.

Als Komponente (B) können prinzipiell alle Polyphenole eingesetzt werden, die sich auch für die Herstellung der in den Oberbegriffen der unabhängigen Ansprüche be- schriebenen Bindemittel eignen.

Insbesondere Diphenole, wie z.B. Hydrochinon oder die leicht zugänglichen Umsetzungsprodukte aus Phenol und Aldehyden bzw. Ketonen wie Formaldehyd, Heptanal oder Aceton, sind als Polyphenolkomponenten einsetzbar. Es können auch Diphenole der allgemeinen Strukturformel $HO-Ar-X-Ar-OH$ ($Ar$ = Phenylenrest, $X$ = $-CO-$ oder $-SO_2-$) verwendet werden.

Als Polyphenol wird ganz besonders bevorzugt Bisphenol A eingesetzt.

Als Komponente (C) können prinzipiell alle Amine eingesetzt werden, die sich auch für die Herstellung der in den Oberbegriffen der unabhängigen Ansprüche beschriebenen Bindemittel eignen.

4

Als Aminkomponenten werden primäre und/oder sekundäre und/oder tertiäre Amine, besonders bevorzugt sekundäre und/oder tertiäre Amine, eingesetzt. Bei der Verwendung von primären Aminen ist besonders darauf zu achten, daß keine schwer bzw. unlöslichen Reaktionsprodukte erhalten werden.

Das Amin sollte vorzugsweise eine in Wasser lösliche Verbindung sein.

Wenn primäre Amine eingesetzt werden sollen, dann werden vorzugsweise Alkylamine wie z.B. Methyl-, Ethyl-, Propyl- und Butylamin verwendet.

Wenn sekundäre Amine eingesetzt werden sollen, dann werden bevorzugt Dialkylamine wie z.B. Dimethylamin, Di-n-Butyl-amin, Dioctylamin, Dikokosamin, Diethylamin, Dipropylamin und Methylbutylamin verwendet. Besonders bevorzugt werden sekundäre Amine, insbesondere Dialkylamine, die mindestens eine OH-Gruppe im Molekül enthalten, eingesetzt. Als Beispiele seien Methylethanolamin und Diethanolamin genannt.

Es können auch Dialkylaminoalkylamine wie z.B. Dimethylamino-ethylamin, Diethylaminopropylamin und Dimethylaminopropyl-amin als Aminkomponenten verwendet werden.

Wenn tertiäre Amine eingesetzt werden sollen, dann werden bevorzugt Trialkylamine wie z.B. Triethylamin, Tri-n-Pentylamin, N,N-Dimethyl-2-Ethylhexylamin und N,N-Dimethylkokosamin verwendet. Besonders bevorzugt werden tertiäre Amine, insbesondere Trialkylamine, die mindestens eine OH-Gruppe im Molekül enthalten, eingesetzt. Als Beispiele seien Dimethylethanolamin, 4-Dimethylamino-1-Butanol und Dimethylneopentanolamin genannt.

Die Aminkomponenten eignen sich besonders gut zur Einführung von verkappten Isocyanatgruppen in die Bindemittelmoleküle. So können Amine, die ein gegenüber Isocyanatgruppen aktives Wasserstoffatom enthalten, mit einem eine freie und minde-

stens eine verkappte Isocyanatgruppe enthaltendem Polyisocyanat zu einer verkappte Isocyanatgruppen enthaltenden Aminkomponente umgesetzt werden, über die dann verkappte Isocyanatgruppen in die Bindemittelmoleküle eingeführt werden können.

Die zur Herstellung der verkappte Isocyanatgruppen enthaltenden Aminkomponenten benötigten teilverkappten Polyisocyanatverbindungen und die zur Herstellung der Aminkomponenten anzuwendenden Reaktionsbedingungen sind gut bekannt und z.B. in der DE-OS-26 34 211 beschrieben.

Als Komponente (A) können prinzipiell alle Epoxidharze eingesetzt werden, deren Epoxidfunktionalität größer als 1 ist und deren Epoxidäquivalentgewicht unter 1000 liegt und die sich für die Herstellung der in den Oberbegriffen der unabhängigen Ansprüche beschriebenen Bindemittel eignen. Als Beispiele seien ggf. modifizierte Polyglycidylether von Polyphenolen und ggf. modifizierte Polyglycidylester genannt.

Bevorzugt werden aus Polyphenolen, vorzugsweise Bisphenol A, und Epihalohydrinen hergestellte, ggf. modifizierte Polyglycidylether als Epoxidharze eingesetzt.

Wenn aus Polyphenolen, vorzugsweise Bisphenol A, und Epihalohydrinen hergestellte Polyglycidylether, die mit Polyether- oder Polyesterdiolen kettenverlängert bzw. modifiziert worden sind (vgl. z.B. DE-OS-2701002) als Epoxidharze verwendet werden, dann werden wasserverdünnbare Bindemittel erhalten, die ganz besonders gute Eigenschaften zeigen.

Ebenfalls besonders bevorzugt eingesetzte Epoxidharze sind mit Monophenolen modifizierte Bisphenol-A-Diglycidylether (vgl. Deutsche Patentanmeldungen mit den Aktenzeichen P 35 18 770.0 und P 35 18 732.8).

Die Epoxidharzkomponente eignet sich besonders gut zur Einführung von aktivierten Estergruppierungen in die Bindemittelmoleküle.

Unter aktivierten Estergruppen werden Estergruppen verstanden, die in der Alkoholkomponente mindestens einen elektronenziehenden Substituenten (Substituenten mit -I Effekt) enthalten. Besonders bevorzugte aktivierte Estergruppen sind β-Hydroxyalkylestergruppen und Carbalkoxymethylestergruppen (vgl. DE-OS-32 15 891).

Die Epoxidharzkomponente kann vor der Umsetzung mit dem aus den Komponenten (B) und (C) bestehenden Gemisch mit einer Verbindung, die mindestens eine aktivierte Estergruppe bzw. einen Vorläufer für eine aktivierte Estergruppe und eine gegenüber Epoxidgruppen reaktive Gruppierung aufweist, modifiziert werden. Auf diese Weise ist es möglich, aktivierte Estergruppierungen in die Bindemittelmoleküle einzuführen.

Die oben beschriebene Modifizierung der Epoxidharzkomponente wird vorzugsweise mit Verbindungen durchgeführt, die neben einer gegenüber Epoxidgruppen reaktiven Gruppe noch eine oder mehrere Carbonsäuregruppen enthalten, die vor oder nach der Umsetzung mit dem Epoxidharz bzw. erst nach dem erfolgten Bindemittelaufbau in β-Hydroxyalkylestergruppen oder Carbalkoxymethylestergruppen überführt werden. Verbindungen, die diese Reaktionsmöglichkeit besitzen, sind z.B. Dihydroxymonocarbonsäuren wie 2,2-Bis-(hydroxymethyl)-propionsäure, 4,4(4,4'-Bis-hydroxyphenyl)-valeriansäure, 3,5-Dihydroxybenzoesäure, Dihydroxydicarbonsäuren wie Weinsäure, 1,1-Methylenbis-(2-hydroxy-3-naphthoesäure) und Aminocarbonsäuren wie 11-Aminoundecansäure, 3-Aminopropionsäure und 4-Aminobenzoesäure.

Es ist - wie bereits mehrfach erwähnt - auch möglich, die aktivierten Estergruppen bzw. blockierten Isocyanatgruppen in einer polymeranalogen Reaktion in das aus den Komponenten (A), (B) und (C) hergestellte Reaktionsprodukt einzuführen. Dabei werden Verbindungen, die neben einer gegenüber Hydroxyl- oder Epoxidgruppen reaktiven Gruppe noch mindestens eine aktivierte Estergruppe oder einen Vorläufer dieser Gruppierung bzw. mindestens eine blockierte Isocyanatgruppe enthalten, mit Hydroxyl- bzw. Epoxidgruppen des aus den Komponenten (A), (B) und (C) hergestellten Reaktionsproduktes umgesetzt. Dabei können im Prinzip alle die Verbindungen eingesetzt werden, die auch zur Einführung von blockierten Isocyanatgruppen bzw. aktivierten Estergruppen in die Aminkomponenten bzw. Epoxidharzkomponenten geeignet sind.

Die Selbstvernetzung der bevorzugten erfindungsgemäßen Bindemittel erfolgt über Reaktionen zwischen den aktivierten Estergruppen bzw. blockierten Isocyanatgruppen mit primären und/oder sekundären Aminogruppen und/oder Hydroxylgruppen. Dabei wird die Alkoholkomponente der aktivierten Estergruppen bzw. das Blockierungsmittel der Isocyanatgruppen abgespalten.

Die Vorteile der erfindungsgemäßen Bindemittel liegen vor allem darin, daß sie ein gutes Dispergierverhalten zeigen und sehr gut als Reibharze zur Herstellung von Pigmentpasten eingesetzt werden können.

Die Erfindung betrifft auch ein Verfahren zur Herstellung von selbstvernetzbaren aktivierte Estergruppen und/oder blockierte Isocyanatgruppen enthaltenden nach partieller oder vollständiger Neutralisation wasserverdünnbaren kathodisch abscheidbaren Bindemitteln auf der Basis von Umsetzungsprodukten aus
(A) gegebenenfalls modifizierten Epoxidharzen, deren Epoxidfunktionalität größer als 1 ist und deren Epoxidäquivalentgewicht unter 1000 liegt,
(B) Polyphenolen und
(C) Aminen,

8

wobei die aktivierten Estergruppen und/oder blockierten Isocyanatgruppen durch eine der Komponenten (A) bis (C) und/oder über eine polymeranaloge Reaktion in die Bindemittelmoleküle eingeführt worden sind, das dadurch gekennzeichnet ist, daß

zunächst ein Gemisch aus den Komponenten (B) und (C) hergestellt wird, das dann mit der Komponente (A) umgesetzt wird und das so erhaltene Reaktionsprodukt nach eventueller Durchführung weiterer polymeranaloger Reaktionen mit einer Säure neutralisiert wird.

Das Gemisch aus Polyphenolen und Aminen wird vorzugsweise in einem geeigneten gegebenenfalls erwärmten Lösungsmittel bereitgestellt und anschließend unter Reaktionsbedingungen, die für die hier in Rede stehende Bindemittelklasse üblich sind, mit dem Epoxidharz umgesetzt. Nach Abschluß der Umsetzung kann das Reaktionsprodukt gegebenenfalls weiteren Umsetzungen - insbesondere polymeranalogen Umsetzungen zur Einführung von aktivierten Estergruppen und/oder blockierten Isocyanatgruppen - unterworfen werden.

Schließlich wird das erhaltene Bindemittel unter Zugabe von wasserlöslichen Säuren (z.B. Ameisensäure, Milchsäure, Propionsäure ...) in Wasser dispergiert und nach gut bekannten Methoden zum einem wäßrigen Elektrotauchlack weiterverarbeitet.

Die Erfindung betrifft auch wasserverdünnbare Überzugszusammensetzungen zur Herstellung von vorzugsweise kathodisch abgeschiedenen hitzehärtbaren Überzügen, deren Bindemittel zumindest zum Teil aus selbstvernetzbaren aktivierte Estergruppen und/oder blockierte Isocyanatgruppen enthaltenden nach partieller oder vollständiger Neutralisation wasserverdünnbaren kathodisch abscheidbaren Bindemitteln auf der Basis von Umsetzungsprodukten aus

(A) gegebenenfalls modifizierten Epoxidharzen, deren Epoxidfunktionalität größer als 1 ist und deren Epoxidäquivalentgewicht unter 1000 liegt,

(B) Polyphenolen und

(C) Aminen,

wobei die aktivierten Estergruppen und/oder blockierten Isocyanatgruppen durch eine der Komponenten (A) bis (C) und/oder über eine polymeranaloge Reaktion in die Bindemittelmoleküle eingeführt worden sind, bestehen. Die erfindungsgemäßen Überzugszusammensetzungen sind dadurch gekennzeichnet, daß die in Rede stehenden Bindemittel hergestellt worden sind, indem zunächst ein Gemisch aus den Komponenten (B) und (C) hergestellt worden ist, das dann mit der Komponente (A) umgesetzt worden ist und das so erhaltene Reaktionsprodukt nach eventueller Durchführung weiterer polymeranaloger Reaktionen mit einer Säure neutralisiert worden ist.

Die erfindungsgemäßen Überzugszusammensetzungen können neben dem erfindungsgemäßen Bindemittel noch weitere Bindemittel und übliche Zusätze, wie z.B. koaleszierende Lösemittel, Pigmente, oberflächenaktive Mittel, Vernetzungskatalysatoren, Antioxidantien, Füllstoffe, Antischaummittel usw. enthalten.

Die mit Hilfe der erfindungsgemäßen Bindemittel zubereiteten wasserverdünnbaren Überzugszusammensetzungen sind insbesondere für das kationische Eletrotauchlackierverfahren geeignet; sie können aber auch in konventionellen Beschichtungsverfahren eingesetzt werden. Als Beschichtungssubstrate können z.B. gegebenenfalls vorbehandelte Metalle, wie Eisen, Stahl, Kupfer, Zink, Messing, Magnesium, Zinn, Nickel, Chrom und Aluminium, aber auch imprägniertes Papier und andere elektrisch leitende Substrate benutzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1  Darstellung eines Monoisocyanates

In einer geeigneten Reaktionsapparatur werden unter Intertgas 1048 Teile einer 80/20 Isomerenmischung von 2,4/2,5-Toluylendiisocyanat langsam unter Rühren mit 785 Teilen 2-Ethylhexanol versetzt, wobei die Temperatur des Ansatzes durch äußere Kühlung auf 38°C eingeregelt wird. Nach Ende der Isocyanatzugabe wird 30 Minuten auf 60°C erwärmt und anschließend in 900 Teilen trockenem Methylisobutylketon angelöst. Es resultiert eine dünnflüssige, wasserklare Lösung.
Isocyanatäquivalentgewicht: 460

Beispiel 2  Darstellung eines Reibharzes I

In einem mit Heizeinrichtung, Rührer, Kühler und Innenthermometer ausgestatteten Reaktor werden unter Inertgas 466 Teile Bisphenol A und 73 Teile N-Methylethanolamin in 1000 Teilen Ethylenglykolmonobutylether gelöst. Die Edukte werden auf 90°C erwärmt und portionsweise mit 961 Teilen eines Epoxidharzes auf Basis Bisphenol A (Epoxidäquivalentgewicht 188) versetzt, wobei die Innentemperatur bei der Umsetzung 110°C nicht übersteigen soll. Nach Ende der Zugabe, die in diesem Fall 60 Minuten dauert, wird eine weitere Stunde bei 90°C nachgerührt. Anschließend werden zu dem auf 50°C abgekühlten Reaktionsgemisch 910 Teile des in Beispiel 1 beschriebenen halbverkappten Diisocyanates so zugetropft, daß die Reaktionstemperatur 70°C nicht übersteigt. Man erhält eine klare Harzlösung mit einem Festgehalt von 65 % und einem Basengehalt von 0,41 Milliäquivalent/g Festharz. Die Viskosität beträgt 14,0 dPa s, gemessen nach Verdünnen mit Tetrahydrofuran auf 49 % Festgehalt bei 23°C.

Beispiel 3  Darstellung eines Reibharzes II

457 Teile Bisphenol A, 104 Teile tert.-Butylphenol sowie 100 Teile N-Methylethanolamin werden in 1280 Teilen Ethylenglykolmonobutylether gelöst und wie in Beispiel 2 beschrieben unter gutem Rühren zunächst bei 100°C mit 1258 Teilen

0 270 877

11

eines portionsweise zugesetzten Epoxidharzes auf Basis Bisphenol A (Epoxidäquivalentgewicht 188) zur Reaktion gebracht. Das resultierende Produkt wird 60 Minuten bei 90°C getempert, anschließend bei 50°C mit 900 Teilen der in Beispiel 1 beschriebenen Isocyanatlösung weiter umgesetzt. Die so erhaltene klare Harzlösung weist einen Festgehalt von 68 %, einen Basengehalt von 0,47 Milliäquivalent/g Festharz und ein Isocyanatäquivalentgewicht größer 10.000 auf. Die Viskosität beträgt 16 dPa s (40%ige Lösung in Tetrahydrofuran bei 23°C).

Darstellung von Pigmentpasten

Die Pigmentpasten werden aus den in der nachfolgenden Tabelle aufgeführten Gewichtsanteilen der Einzelkomponenten zubereitet. Hierzu wird das Harz zusammen mit der ersten Portion entionisiertem Wasser (Wasser -1), Eisessig, Pigmenten und Füllstoffen vermengt und mit einem Schnellrührer vorgemischt. Diese Mischung wird anschließend in einem Mahlaggregat auf eine Hegmann-Feinheit von 6-9 zerkleinert. Danach gibt man eine zweite Portion entionisiertes Wasser (Wasser -2) zu, um die gewünschte Pastenkonsistenz zu erreichen.

Zusammensetzung der Pigmentpasten

|  | Pigmentpaste 1 | Pigmentpaste 2 |
|---|---|---|
| Harz aus Beispiel 2 | 400 | – |
| Harz aus Beispiel 3 | – | 400 |
| Wasser-1 | 350 | 350 |
| Eisessig | 7,3 | 9,3 |
| Titandioxid | 435 | 435 |
| Extender auf Basis Aluminiumsilikat | 105 | 105 |
| Bleisilikat | 26,5 | 26,5 |
| Ruß | 6,5 | 6,5 |
| Wasser-2 | 184,2 | 204,1 |
| Festgehalt | 55 % | 55 % |

Darstellung eines Vernetzers

Gemäß der DE-OS 27 01 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4/2,6-Touylendiisocyanat unter Rühren und in einer Stickstoffatmosphäre gegeben werden, wobei die Reaktionstemperatur durch äußere Kühlung unter 38°C gehalten wird. Der Anstz wird noch eine halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Darstellung einer wäßrigen Bindemitteldispersion I
gemäß EP 0 154 724

Ein Reaktor, der mit einer Heizeinrichtung, einem Rührer, einem Kühler, einem Thermometer und einem Stickstoffeinlaß ausgerüstet ist, wird mit 1053 Teilen eines Bisphenol A-Epoxidharzes mit einem Epoxidäquivalentgewicht von 188, 205 Teilen Hexylglykol, 20 Teilen Xylol und 5 Teilen Dimethylbenzylamin beschickt. Die Temperatur wird auf 131°C angehoben und die Reaktion durchgeführt, bis ein Epoxidäquivalentgewicht von 440 erreicht ist. Danach werden 376 Teile eines handelsüblichen Polycaprolactondiols mit einem Molekulargewicht von 535 und weitere 2 Teile Dimethylbenzylamin zugefügt. Die Reaktion wird bei 131°C weitergeführt, bis das Reaktionsgemisch ein Epoxidäquivalentgewicht von 1100 aufweist. Danach werden 1260 Teile des zuvor beschriebenen Vernetzungsmittels zugesetzt. Durch externe Kühlung wird die Reaktionstemperatur auf 90°C gesenkt. Das Reaktionsgemisch wird nun mit 110 Teilen eines Umsetzungsproduktes aus 1 Mol Diethylentriamin und 2 Mol Methylisobutylketon (70%ig in Methylisobutylketon) und 83 Teilen N-Methylethanol-

13

amin versetzt, wobei die Temperatur exotherm auf 115°C ansteigt. Die Temperatur wird anschließend noch 1 Stunde bei 110°C gehalten. Danach wird der Reaktionsansatz mit 134 Teilen Propylenglykolphenylether verdünnt, auf 95°C abgekühlt und ausgetragen. Es resultiert eine klare Harzlösung.

Inzwischen wird ein Dispergierbad aus 1472 Teilen entionisiertem Wasser, 23 Teilen Eisessig und 1 Teil eines handelsüblichen Entschäumers vorbereitet, in das 1600 Teile der zuvor beschriebenen Harzlösung unter Rühren eingetragen werden. Man läßt das Dispergiergemisch noch 2 Stunden rühren, bevor mit weiteren 942 Teilen entionisiertem Wasser verdünnt wird. Es resultiert eine niederviskose Dispersion mit einem Feststoffgehalt von 35 %.

Zubereitung der Elektrotauchbäder und Abscheidung von Lackfilmen

Jeweils 200 Gewichtsteile der oben beschriebenen Bindemitteldispersion werden mit 680 Gewichtsteilen der Pigmentpaste vermischt. Der Badfestkörper wird mit entionisiertem Wasser auf 20 % (150°C, 30 Minuten) eingestellt. Man läßt dann das Bad 3 Tage unter rühren altern. Die Abscheidung der Lackfilme erfolgt während 2 Minuten auf zinkphosphatiertem Blech. Die Badtemperatur beträgt hierbei 27°C. Die abgeschiedenen Filme werden bei 180°C während 20 Minuten eingebrannt.

Ergebnis der Abscheidungen

| Bad | I | II |
|---|---|---|
| Pigmentpaste | 1 | 2 |
| Schichtdicke ($\mu$m) bei Spannung (V) | 23/280 | 27/300 |
| Verlauf* | 1,5 | 1,5 |
| Kraterbewertung* | 1,0 | 0,5 |
| Erichsentierung (mm) | 7,2 | 7,4 |
| Gitterschnitt* | 0 | 0 |

* 0 = bester Wert, 5 = schlechtester Wert

0 270 877

PAT 86 103
13.11.1986

Patentansprüche

1. Selbstvernetzbare aktivierte Estergruppen und/oder blockierte Isocyanatgruppen enthaltende nach partieller oder vollständiger Neutralisation kathodisch abscheidbare wasserverdünnbare Bindemittel auf der Basis von Umsetzungsprodukten aus

(A) gegebenenfalls modifizierten Epoxidharzen, deren Epoxidfunktionalität größer als 1 ist und deren Epoxidäquivalentgewicht unter 1000 liegt,

(B) Polyphenolen und

(C) Aminen,

wobei die aktivierten Estergruppen und/oder blockierten Isocyanatgruppen durch eine der Komponenten (A) bis (C) und/oder über eine polymeranaloge Reaktion in die Bindemittelmoleküle eingeführt worden sind, dadurch gekennzeichnet, daß die Bindemittel hergestellt worden sind, indem zunächst ein Gemisch aus den Komponenten (B) und (C) hergestellt worden ist, das dann mit der Komponente (A) umgesetzt worden ist und das so erhaltene Reaktionsprodukt nach eventueller Durchführung weiterer polymeranaloger Reaktionen mit einer Säure neutralisiert worden ist.

2. Wasserverdünnbare Überzugszusammensetzungen zur Herstellung von vorzugsweise kathodisch abgeschiedenen hitzehärtbaren Überzügen, deren Bindemittel zumindest zum Teil aus selbstvernetzbaren aktivierte Estergruppen und/oder blockierte Isocyanatgruppen enthaltenden nach partieller oder vollständiger Neutralisation wasserverdünnbaren Bindemitteln auf der Basis von Umsetzungsprodukten aus

(A) gegebenenfalls modifizierten Epoxidharzen, deren Epoxidfunktionalität größer als 1 ist und deren Epoxidäquivalentgewicht unter 1000 liegt,

(B) Polyphenolen und

(C) Aminen,

wobei die aktivierten Estergruppen und/oder blockierten Isocyanatgruppen durch eine der Komponenten (A) bis (C) und/oder über eine polymeranaloge Reaktion in die Bindemittelmoleküle eingeführt worden sind, bestehen, dadurch gekennzeichnet, daß die Bindemittel hergestellt worden sind, indem zunächst ein Gemisch aus den Komponenten (B) und (C) hergestellt worden ist, das dann mit der Komponente (A) umgesetzt worden ist und das so erhaltene Reaktionsprodukt nach eventueller Durchführung weiterer polymeranaloger Reaktionen mit einer Säure neutralisiert worden ist.

3. Bindemittel oder Überzugszusammensetzungen nach Anspruch 1 oder 2, dadurch gekennzeichnet, daß als Epoxidharz ein aus einem Polyphenol, vorzugsweise Bisphenol A, und einem Epihalohydrin hergestellter Polyglycidylether eingesetzt worden ist.

4. Bindemittel oder Überzugszusammensetzungen nach Anspruch 1 oder 2, dadurch gekennzeichnet, daß als Epoxidharz ein aus einem Polyphenol, vorzugsweise Bisphenol A, und einem Epihalohydrin hergestellter Polyglycidylether, der mit einem Polyether- oder Polyesterdiol kettenverlängert bzw. modifiziert worden ist, eingesetzt worden ist.

5. Bindemittel oder Überzugszusammensetzungen nach einem der Ansprüche 1 oder 2, dadurch gekennzeichnet, daß als Epoxidharz ein mit einem Monophenol modifizierter Bisphenol-A-Diglycidylether eingesetzt worden ist.

6. Bindemittel oder Überzugszusammensetzungen nach einem der Ansprüche 1 bis 5, dadurch gekennzeichnet, daß als Polyphenol-Amingemisch ein Gemisch aus mindestens einem Polyphenol, vorzugsweise Bisphenol A, und minde-

0 270 877

3

stens einem, vorzugsweise mindestens eine Hydroxylgruppe im Molekül enthaltendem, sekundären und/oder tertiären Amin, vorzugsweise Dialkyl- und/oder Trialkylamin, eingesetzt worden ist.

7. Verfahren zur Herstellung von selbstvernetzbaren aktivierte Estergruppen und/oder blockierte Isocyanatgruppen enthaltenden nach partieller oder vollständiger Neutralisation kathodisch abscheidbaren wasserverdünnbaren Bindemitteln auf der Basis von Umsetzungsprodukten aus

(A) gegebenenfalls modifizierten Epoxidharzen, deren Epoxidfunktionalität größer als 1 ist und deren Epoxidäquivalentgewicht unter 1000 liegt,

(B) Polyphenolen und

(C) Aminen,

wobei die aktivierten Estergruppen und/oder blockierten Isocyanatgruppen durch eine der Komponenten (A) bis (C). und/oder über eine polymeranaloge Reaktion in die Bindemittelmoleküle eingeführt worden sind, dadurch gekennzeichnet, daß

zunächst ein Gemisch aus den Komponenten (B) und (C) hergestellt wird, das dann mit der Komponente (A) umgesetzt wird und das so erhaltene Reaktionsprodukt nach eventueller Durchführung weiterer polymeranaloger Reaktionen mit einer Säure neutralisiert wird.

| | Europäisches Patentamt | EUROPÄISCHER RECHERCHENBERICHT | Nummer der Anmeldung |
|---|---|---|---|
| | | | EP 87 11 6849 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 135 811 (BASF FARBEN + FASERN) * Zusammenfassung * --- | | C 09 D 5/44 C 08 G 59/56 |
| A | EP-A-0 093 241 (BASF FARBEN + FASERN) & DE-A-3 215 891 (Kat. D) ----- | | |
| | | | **RECHERCHIERTE SACHGEBIETE (Int. Cl.4)** C 09 D C 08 G |

Der vorliegende Recherchenbericht wurde für alle Patentansprüche erstellt

| Recherchenort | Abschlußdatum der Recherche | Prüfer |
|---|---|---|
| DEN HAAG | 02-03-1988 | GIRARD Y.A. |